Europäisches Patentamt

European Patent Office

Office européen des brevets

(19)

(11) **EP 0 856 832 A1**

(12) ## DEMANDE DE BREVET EUROPEEN

(43) Date de publication:
05.08.1998 Bulletin 1998/32

(51) Int Cl.⁶: $G10L\ 3/00$

(21) Numéro de dépôt: 98200157.0

(22) Date de dépôt: 22.01.1998

(84) Etats contractants désignés:
AT BE CH DE DK ES FI FR GB GR IE IT LI LU MC
NL PT SE
Etats d'extension désignés:
AL LT LV MK RO SI

(30) Priorité: 03.02.1997 FR 9701170

(71) Demandeur: Philips Electronics N.V.
5621 BA Eindhoven (NL)

(72) Inventeurs:
• **Miet, Gilles**
**75008 Paris (FR)**
• **Guilhaumon, Benoît**
**75008 Paris (FR)**

(74) Mandataire: **Chaffraix, Jean**
**Société Civile S.P.I.D.**
**156, Boulevard Haussmann**
**75008 Paris (FR)**

(54) **Procédé de reconnaissance vocale de mots et dispositif dans lequel ledit procédé est mis en application**

(57) Ce procédé comporte les étapes suivantes :

- décomposition du mot à reconnaître en vecteurs d'entrée (K2a),
- évaluation du bruit environnant (K1),
- choix du mot à reconnaître, en tenant compte de ladite étape d'évaluation du bruit, parmi les mots du dictionnaire en choisissant le mot du dictionnaire dont la distance qui sépare ses vecteurs d'entrée avec les vecteurs de référence est la plus proche,
- validation du mot à reconnaître en comparant ladite distance avec une valeur de seuil.

Selon ce procédé, l'étape d'évaluation du bruit environnant peut être effectuée en un moment où le locuteur ne parle pas et il est prévu l'étape suivante :

- modifications de la valeur de seuil en fonction de l'évaluation effectuée dans ladite étape d'évaluation (K2).

Application aux radio téléphones cellulaires.

FIG. 3

EP 0 856 832 A1

# Description

La présente invention concerne un procédé de reconnaissance vocale de mots émis par un locuteur, selon lequel des mots sont mis dans un dictionnaire sous forme de vecteurs de référence, procédé comportant les étapes suivantes:

- décomposition du mot à reconnaître en vecteurs d'entrée,
- évaluation du bruit environnant,
- choix du mot à reconnaître, en tenant compte de ladite étape d'évaluation du bruit, parmi les mots du dictionnaire en choisissant le mot du dictionnaire dont la distance qui sépare ses vecteurs d'entrée avec les vecteurs de référence est la plus proche,
- validation du mot à reconnaître en comparant ladite distance avec une valeur de seuil.

L'invention concerne aussi un dispositif dans lequel le procédé est mis en application, notamment un appareil téléphonique sans fil pour réseaux radiophoniques cellulaires pour lequel les ressources matérielles, mémoires et processeurs, sont plutôt attribuées de façon limitée.

Un tel procédé est décrit dans le document de brevet EP 0 750 292. Selon ce procédé connu, le bruit est estimé et tous les vecteurs du signal d'entrée et les vecteurs des signaux de référence sont modifiés en fonction de ce niveau de bruit, en autres.

Ce procédé connu est peu applicable aux dispositifs de petite taille dans lesquels les ressources sont attribuées avec parcimonie, notamment la mémoire. En outre, ces mises à jour des vecteurs de référence prennent du temps, ce qui est encore néfaste pour l'exploitation de petits dispositifs.

La présente invention propose un procédé du genre décrit ci-dessus qui donne de bonnes performances en ce qui concerne la reconnaissance de la parole en milieu bruyant, tout en n'utilisant que très peu de ressources matérielles notamment de la mémoire.

Pour cela, un tel procédé du genre mentionné dans le préambule est remarquable en ce qu'il comporte au moins l'étape suivante :

- modifications de la valeur de seuil en fonction de l'évaluation effectuée dans ladite étape d'évaluation.

L'idée de l'invention repose sur le fait que lorsqu'on est dans un environnement silencieux, la reconnaissance de la parole doit se faire avec un seuil peu élevé puisque les conditions sont bonnes. Lorsque l'environnement devient bruyant, il y a lieu de prévoir un seuil plus tolérant car le bruit fausse les vecteurs d'entrée.

La description suivante faite en regard des dessins ci-annexés, le tout donné à titre d'exemple non limitatif, fera bien comprendre comment l'invention peut être réalisée.

La figure 1 montre un dispositif conforme à l'invention.

La figure 2 montre un diagramme temps.

La figure 3 montre un organigramme explicitant le procédé de l'invention.

La figure 4 montre l'évolution du seuil en fonction du bruit ambiant.

La figure 5 montre un organigramme explicitant une variante de réalisation du procédé de l'invention.

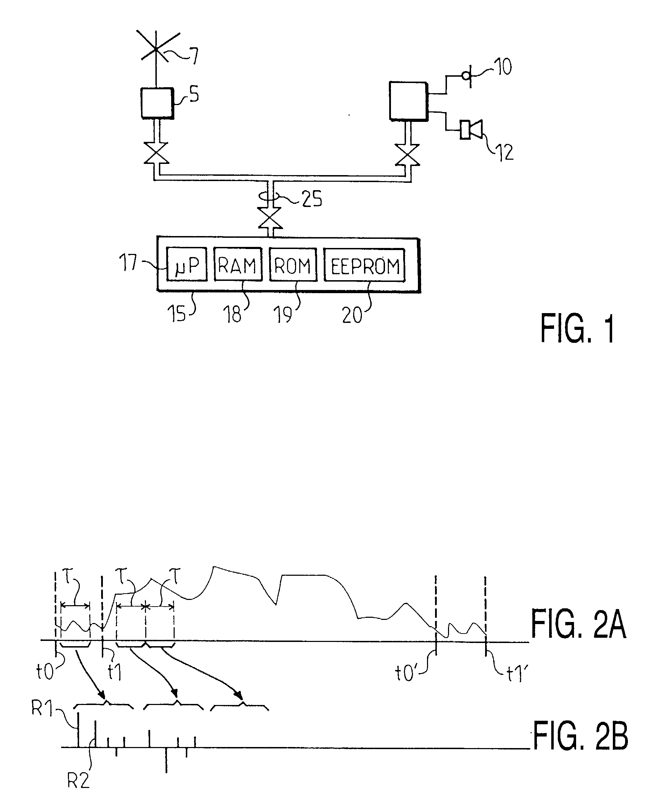

A la figure 1, le dispositif dans lequel le procédé peut être mis en application est un appareil de téléphonie du genre terminal GSM. Il est composé d'un ensemble d'émission-réception 5. A cet ensemble 5, est rattachée une antenne d'émission-réception 7 qui permet de recevoir et d'émettre des ondes depuis ou vers une station de base non représentée. Pour que l'utilisateur puisse échanger des propos avec ses correspondants, il est prévu un microphone 10 et un haut-parleur 12. Ce microphone sera aussi utilisé pour la mise en application de la reconnaissance vocale, de sorte que l'utilisateur pourra donner des ordres et/ou gérer son annuaire en appelant le noms connus. Les autres organes tels qu'un écran ou un clavier ne sont pas représentés car ils interviennent peu dans l'invention. Le dispositif de la figure 1 est doté d'un ensemble à microprocesseur 15 comportant un microprocesseur 17 proprement dit, une mémoire vive 18 et une mémoire morte 19 contenant les instructions pour la mise en application du procédé de l'invention et une mémoire effaçable électriquement 20 pour contenir les vecteurs de référence définissant le vocabulaire à reconnaître et à mettre aussi à jour. Cet ensemble à microprocesseur 15 communique ses informations à tous les autres éléments du dispositif au moyen d'une ligne commune 25.

La figure 2 montre un diagramme temps qui représente en A les signaux de parole. Selon les techniques usuelles de reconnaissance de parole, telles qu'explicitées dans le document de brevet européen précités, on détermine sur ces signaux de paroles des spectres évolutifs sur un temps $\tau$ représentés en B sur la figure 2 par les raies R1, R2,.... Les différentes raies de ce spectre obtenues par transformée de Fourier rapide, par exemple, constituent des vecteurs. Pour déterminer la reconnaissance d'un mot on compare ces différentes raies avec celles établies au préalable constituant le dictionnaire et contenues dans la mémoire 20.

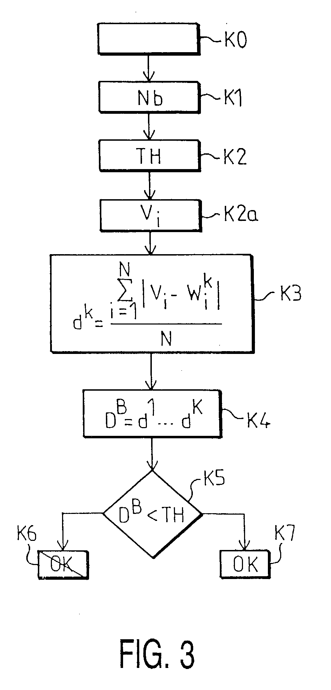

La figure 3 montre l'organigramme explicitant le procédé de l'invention.

La case K0 représente l'activation de la reconnaissance de parole ; ceci peut être fait en validant un item sur le menu apparaissant sur l'écran du dispositif.

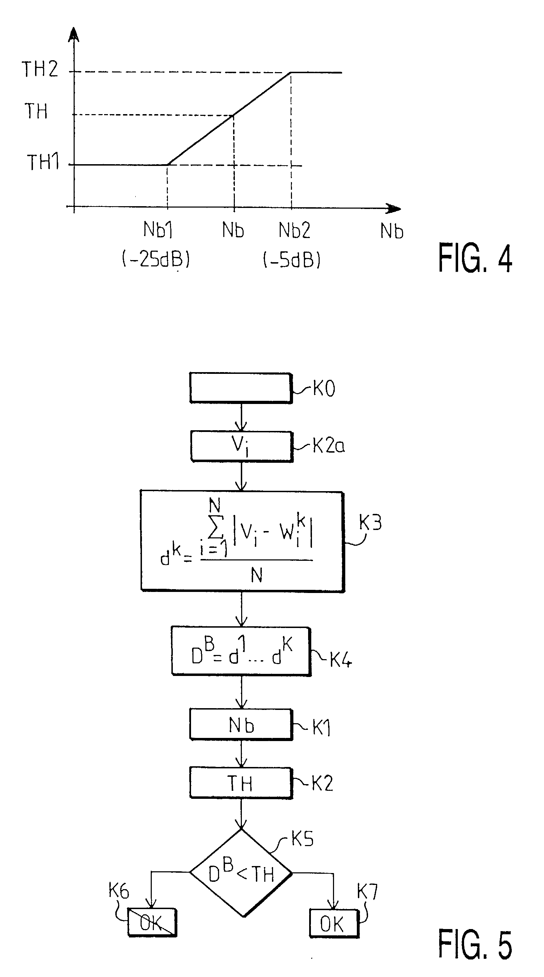

La case K1 représente l'étape d'évaluation du bruit environnant. Cette étape est exécutée entre les instants t0 et t1 (cf figure 2) entre lesquels le locuteur est censé ne pas parler. Soit Nb cette valeur qui est exprimée en dB par rapport au niveau maximum (si on travaille sur 8 bits ce niveau maximum 0 dB est donné par 1111 1111). Cette mesure est faite en considérant la valeur moyenne, des modules ou de leurs carrés, des vecteurs de bruit. De ce niveau ainsi mesuré, on déduit un seuil TH case K2 en fonction de la courbe représentée à la figure 4.

La case K3 indique le calcul des distances $d^k$ entre les vecteurs d'entrée $V_i$ et les vecteurs de référence $W^K_i$. Cette distance est évaluée à partir de la valeur absolue des différences entre les composantes de ces vecteurs. On détermine, à la case K4, la distance minimum $D^B$ parmi celles qui ont été calculées. Cette dernière valeur est comparée à la valeur de seuil TH, case K5. Si cette valeur est supérieure au seuil TH, le mot est rejeté case K6, sinon il est déclaré reconnu case K7.

Différentes étapes peuvent être interverties dans le procédé de l'invention. Comme cela est montré à la figure 5, l'évaluation du bruit environnant peut aussi s'effectuer après que le locuteur ait parlé soit aux instants t0' et t1' (cf figure 2). Ceci se traduit sur l'organigramme de la figure 5 par le fait que les étapes K1 et K2 surviennent après l'étape K4 et avant l'étape de décision K5.

La fin de cette étape d'évaluation, selon une caractéristique de l'invention, peut être signalée au locuteur par l'émission d'un bip émis par exemple par le haut-parleur 12 qui invite alors selon l'usage l'utilisateur à parler.

La demanderesse s'est rendue compte qu'une fonction sensiblement linéaire de la valeur du seuil en fonction du niveau de bruit mesuré en dB donnait satisfaction. Bien entendu d'autre fonctions peuvent être trouvées sans pour cela sortir du cadre de l'invention.

Si les distances varient entre une valeur de 0 à 100 les valeurs de TH1 peuvent être de 10 et celles de TH2 de 80 pour des niveaux de bruit variant de - 25dB à - 5dB.

Pour le calcul du seuil TH, le niveau de bruit (Nb) peut être comparé au niveau du signal (Ns) définissant un rapport signal à bruit RSB (niveau du signal calculé à partir des vecteurs d'entrée : Vi).

$$Ns = \frac{1}{N} \sum_{i=1}^{N} V_i^2 - Nb$$

$$Nb = \frac{1}{P} \sum_{i=1}^{P} (B_i)^2$$

où $B_i$ sont les composantes du bruit.

$$RSB \text{ (rapport signal à bruit)} = \frac{Ns}{Nb}$$

La courbe donnant TH en fonction de RSB est la même que TH en fonction de Nb.

Sans sortir du cadre de l'invention, il est possible d'évaluer le bruit, lorsque l'utilisateur est en conversation, en utilisant des méthodes d'autocorrélations.

Dans ce cas, Nb et Ns sont calculés dans un même niveau d'étape et TH est évalué à partir de RSB.

## Revendications

1.  Procédé de reconnaissance vocale de mots émis par un locuteur, selon lequel des mots sont mis dans un dictionnaire sous forme de vecteurs de référence, procédé comportant les étapes suivantes :

    -   décomposition du mot à reconnaître en vecteurs d'entrée (K2a),
    -   évaluation du bruit environnant (K1),
    -   choix du mot à reconnaître, en tenant compte de ladite étape d'évaluation du bruit, parmi les mots du dictionnaire en choisissant le mot du dictionnaire dont la distance qui sépare ses vecteurs d'entrée avec les vecteurs de référence est la plus proche (K4),
    -   validation du mot à reconnaître en comparant ladite distance avec une valeur de seuil (K7),

    caractérisé en ce qu'il comporte au moins l'étape suivante :

    -   modifications de la valeur de seuil en fonction de l'évaluation effectuée dans ladite étape d'évaluation (K2).

2.  Procédé selon la revendication 1, caractérisé en ce que ladite étape d'évaluation est effectuée avant que le locuteur ne parle (t0-t1 fig.2).

3.  Procédé selon la revendication 1, caractérisé en ce que ladite étape d'évaluation est effectuée après que le locuteur ait parlé (t'0-t'1 fig.2).

4.  Procédé selon la revendication 1, caractérisé en ce qu'il est prévu une étape d'invitation à parler et en ce que ladite étape d'évaluation est effectuée avant cette étape d'invitation.

5.  Procédé selon l'une des revendications 1 à 4 caractérisé en ce que la variation du seuil est une fonction sensiblement linéaire du niveau de bruit mesuré en décibels.

6.  Dispositif caractérisé en ce qu'il comporte notamment, un avertisseur sonore, de préférence, (12), un microphone (10) pour capter les paroles du locuteur et un ensemble à microprocesseur (15) pour exécuter des instructions pour la mise en application du procédé selon l'une des revendications 1 à 5.

7.  Dispositif selon la revendication 6, caractérisé en ce que ladite étape d'évaluation est entreprise à un instant initial (t0 ou t'0).

8.  Dispositif selon la revendication 6 ou 7 caractérisé en ce que l'étape d'invitation à parler est signalée au locuteur en activant ledit avertisseur.

9.  Dispositif selon l'une des revendications 6 à 8 caractérisé en ce qu'il est une station de téléphone cellulaire.

FIG. 1

FIG. 2A

FIG. 2B

$$d^k = \frac{\sum_{i=1}^{N} |V_i - W_i^k|}{N}$$

$$D^B = d^1 \ldots d^K$$

$$D^B < TH$$

FIG. 3

FIG. 4

$$d^k = \dfrac{\displaystyle\sum_{i=1}^{N} \left| V_i - W_i^k \right|}{N}$$

$D^B = d^1 \ldots d^K$

FIG. 5

EP 0 856 832 A1

## Office européen des brevets
## RAPPORT DE RECHERCHE EUROPEENNE

Numéro de la demande

EP 98 20 0157

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | PATENT ABSTRACTS OF JAPAN<br>vol. 014, no. 129 (P-1020), 12 mars 1990<br>& JP 01 321499 A (MATSUSHITA ELECTRIC),<br>27 décembre 1989,<br>* abrégé * | 1 | G10L3/00 |
| X | PATENT ABSTRACTS OF JAPAN<br>vol. 017, no. 277 (P-1546), 27 mai 1993<br>& JP 05 011795 A (FUJITSU), 22 janvier 1993,<br>* abrégé * | 1,6 | |
| X<br>Y | US 4 239 936 A (SAKOE) 16 décembre 1980<br>* colonne 4, ligne 34 - colonne 6; figure 4 * | 1<br>2,5,8 | |
| Y | PATENT ABSTRACTS OF JAPAN<br>vol. 015, no. 360 (P-1250), 11 septembre 1991<br>& JP 03 138698 A (YUHSHIN), 13 juin 1991,<br>* abrégé * | 2 | |
| Y | PATENT ABSTRACTS OF JAPAN<br>vol. 014, no. 445 (P-1110), 25 septembre 1990<br>& JP 02 176796 A (NEC), 9 juillet 1990,<br>* abrégé * | 5 | DOMAINES TECHNIQUES RECHERCHES (Int.Cl.6)<br><br>G10L |
| Y | PATENT ABSTRACTS OF JAPAN<br>vol. 018, no. 039 (P-1679), 20 janvier 1994<br>& JP 05 265484 A (FUJITSU), 15 octobre 1993,<br>* abrégé * | 8 | |
| D,A | EP 0 750 292 A (NIPPON ELECTRIC) 27 décembre 1996<br>* page 5, ligne 24 - page 6, ligne 11 * | 1 | |

Le présent rapport a été établi pour toutes les revendications

| Lieu de la recherche | Date d'achèvement de la recherche | Examinateur |
|---|---|---|
| LA HAYE | 2 juin 1998 | Lange, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant